# EUROPÄISCHE PATENTSCHRIFT

(11) **EP 2 729 520 B1**
(45) Veröffentlichungstag und Bekanntmachung des Hinweises auf die Patenterteilung: **19.08.2015**
(21) Anmeldenummer: 12730996.1
(22) Anmeldetag: 04.07.2012
(51) Int. Cl.: C08J 7/04, C09D 7/12, H04N 7/00

(54) **MATTE, FLAMMGESCHÜTZTE ARTIKEL MIT HOHER TRANSMISSION**
MATTE FLAME-RETARDANT ARTICLE WITH HIGH TRANSMISSION
ARTICLES MATS IGNIFUGÉS À HAUT NIVEAU DE TRANSMISSION

(30) Priorität: 08.07.2011 EP 11173314
(43) Veröffentlichungstag der Anmeldung: 14.05.2014
(73) Patentinhaber: Bayer Intellectual Property GmbH, 40789 Monheim (DE)
(72) Erfinder: HILDENBRAND, Karlheinz, 88696 Owingen (DE); KRÜLLS, Helmut, 40668 Meerbusch (DE); FRANSSEN, Hans, 47809 Krefeld (DE); CAPELLEN, Peter, 47803 Krefeld (DE); HAHN, Rüdiger, 51399 Burscheid (DE); MÜLLER, Andreas, 51061 Köln (DE); SCHWECKE, Constantin, 53347 Alfter (DE)
(74) Vertreter: BIP Patents
(86) Internationale Anmeldenummer: PCT/EP2012/062952
(87) Internationale Veröffentlichungsnummer: WO 2013/007562

(56) Entgegenhaltungen:
- EP-A1- 1 835 001
- EP-A1- 2 261 289
- WO-A1-80/00143
- WO-A1-2004/031273

## Beschreibung

Die Erfindung betrifft beschichtete Artikel, enthaltend ein Substrat (S) aus einem transparenten, Flammschutzmittel enthaltenden thermoplastischen Polymer, sowie einseitig oder beidseitig eine Silika-Mikropartikel enthaltende Kratzfestbeschichtung (K). Die Erfindung betrifft außerdem die Herstellung solcher beschichteter Artikel und deren Verwendung, insbesondere, zur Herstellung von Flachbildschirmen und Verscheibungen sowie daraus erhältliche Flachbildschirme und Verscheibungen.

Der Ausdruck "Bildschirm" beschreibt in der vorliegenden Anmeldung die Vorderfront eines Monitors beinhaltend die sogenannte Bildfläche, d.h. eine transparente Frontscheibe zur Wiedergabe des Bildes, und optional einen umlaufenden Rahmen aus einem vorzugsweise nicht transparenten Material. Zumeist handelt es sich bei den Bildschirmen heute um Flachbildschirme.

Der Markt der Flachbildfernseher ist in den letzten Jahren stark gewachsen. Treiber dieses Wachstums war neben der fortschreitenden Flachbildtechnologie insbesondre die starke Fokussierung der Hersteller auf ein innovatives TV-Design. Innovative Designs konnten u.a. durch die Nutzung von Kunststoffen als Gehäusematerial des TV-Gerätes verwirklicht werden. So konnte z.B. in den letzten Jahren der verstärkte Einbau von schwarzen, hochglänzenden TV-Frontrahmen beobachtet werden. Für den Kunststoffeinsatz bevorzugte Gehäuseteile waren in den letzten Jahren Frontrahmen und TV-Rückseiten.

Im Inneren des Fernsehers besteht die Herausforderung unter anderem darin, möglichst das gesamte erzeugte Licht durch die Mattscheibe des TV-Geräts nach vorne auszugeben. Hier wurden in den letzten Jahren verstärkte Anforderungen an die Kunststoffteile im Inneren eines TV-Gerätes gestellt.

Gleichzeitig mit dem starken Wachstum des Flachbildfernseher-Marktes steigen die Sicherheitsbestimmungen für solche TV-Geräte. So schreibt die EN 60065 mit Verweis auf die CLC/TS 62441 ab Juli 2010 vor, dass Flachbildfernseher in der Europäischen Union Mindeststandards an den Flammschutz der verwendeten Gehäusematerialien erfüllen müssen. Der Bedarf an einem verbesserten Flammschutz kombiniert mit hohen und immer neuen Anforderungen an das Design lässt einen Bedarf an neuen Konzepten für die Herstellung von TV-Gehäuseteilen erforderlich werden. So kann es eine Option sein, das Design durch den weiter verstärkten Einsatz von Kunststoffen, z.B. in der Mattscheibe, die bisher meist aus Glas gefertigt wird, unter Berücksichtigung von Materialeigenschaften wie Transparenz, Transmission und Flammschutz weiter zu verändern. Für einen ökonomischen Herstellprozess ist von großem Interesse, für Rahmen und Bildfläche (screen) des Bildschirms die gleiche Substratschicht zu nutzen. Dies bedeutet, dass das eingesetzte Material sowohl die an den Rahmen als auch die an die Bildfläche gestellten Forderungen insbesondere hinsichtlich Abriebsfestigkeit, Transmission, Flammfestigkeit und Viskosität erfüllen muss.

Unbeschichtete Substrate erfüllen die Anforderungen für einen Einsatz für Bildschirme, insbesondere Flachbildschinne aus mehreren Gründen nicht zufriedenstellend. Zum einen sind die Abriebwerte, beispielsweise hinsichtlich Reinigung, zu gering, zum anderen sind für den Einsatz beispielsweise im Elektro- oder Elektronik-Sektor (E/E) erhöhte Flammschutzeigenschaften gefordert, die von vielen konventionellen thermoplastischen Polymeren, insbesondere bei geringen Wandstärken, nur unzureichend erfüllt werden können, wenn gleichzeitig ein gutes mechanisches Eigenschaftsprofil erhalten werden soll. Darüberhinaus werden von manchen Herstellern mattierte, nicht glänzende Oberflächen gewünscht.

Und schließlich sind aus produktionstechnischen Gründen insbesondere leicht fließende Thermoplasten, die relativ hohe MVR Werte aufweisen, von Interesse.

In DE 2947 823 A1 und DE 10 2008 010 752 A1 sind kratzfeste Beschichtungen für Polycarbonat-Substrate beschrieben. Flammschutzmittel werden nicht erwähnt.

WO 2008/091131 A1 beschreibt, dass Beschichtungs-Zusammensetzungen aus Wasserglas, SiO₂ und Silanen eine Flammschutzwirkung aufweisen, die beschichteten Artikel der vorliegenden Anmeldung werden jedoch nicht beschrieben.

In WO 80/00143 A1 sind kratzfeste Beschichtungen für flammgeschützte Polycarbonate beschrieben.

US 2006/0100359 und JP 2003-128917 beschreiben Beschichtungszusammensetzungen, die eine flammschützende Wirkung aufweisen. Beschichtete Artikel gemäß der vorliegenden Anmeldung werden nicht beschrieben.

Bisher bietet der Stand der Technik noch keine Lösung, die das Eigenschaftsprofil eines matten und gleichzeitig flammgeschützten Artikels mit ausreichender Transmission, wie es z.B. für einen Einsatz der Bildfläche eines Bildschirms gefordert wird, bei Artikeln enthaltend nur eine Substratschicht befriedigt werden kann, und einfach hergestellt werden kann.

Überraschenderweise wurde nun gefunden, dass Substrate, beispielweise Platten, Scheiben oder Folien, aus flammgeschützten transparenten thermoplastischen Kunststoffen, nach Ausrüstung mit Silika-Mikropartikel haltigen Beschichtungen eine Kombination aus ausgezeichneten Flammschutzeigenschaften, matter Oberfläche und guten Transmissionseigenschaften aufweisen.

Die erfindungsgemäßen Artikel, enthaltend ein Substrat (S) aus einem transparenten, Flammschutzmittel enthaltenden thermoplastischen Polymer, sowie eine Silika-Mikropartikel enthaltende Kratzfestbeschichtung (K), stellen somit für die zuvor geschilderte Problemstellung eine einfach herzustellende und flexible Lösung dar. Es ist vorteilhaft, dass sich die erfindungsgemäßen Beschichtungen in einem Produktionsschritt, z.B. nach dem Vorhanggießverfahren, herstellen lassen. Dabei kann die Substratrückseite zur Verhinderung von Kratzern, mit einer Schutzfolie, bspw. aus Polyethylen, kaschiert werden.

Durch das Vorhanggießverfahren werden neben der Substratvorderseite auch die Kanten des Substrates beschichtet.

Gegenstand der Erfindung ist daher ein beschichteter Artikel, enthaltend a) ein Substrat (S) mit einer Transmission mindestens 88 %, (gemessen nach ASTM E 1348 bei 3 mm Schichtdicke und einer Wellenlänge von 550 nm) enthaltend ein flammgeschütztes thermoplastischen Polymer und b) auf dem Substrat eine Silika-Mikropartikel enthaltende Kratzfestbeschichtung (K), wobei 0,2 bis 1,8 Gew.% Silika Mikropartikel bezogen auf den Feststoffanteil der Kratzfestbeschichtung (K) enthalten sind.

Die Erfindung betrifft außerdem die Herstellung solcher Artikel und deren Verwendung, insbesondere zur Herstellung von Flachbildschirmen und für Verscheibungen sowie die daraus erhältlichen Flachbildschirme und Verscheibungen.

Die erfindungsgemäßen Artikel sind hochtransparent. "Hochtransparent" bedeutet im Sinne dieser Erfindung, dass das beschichtete Polymersubstrat eine Transmission von mindestens 88%, bevorzugt von mindestens 90% und ganz besonders bevorzugt eine Transmission von 91% bis 92% im Bereich des sichtbaren Spektrums (550 bis 750 nm) aufweist, wobei die Transmissionsbestimmung nach ASTM E 1348: "Standard Test Method for Transmittance and Color by Spectrophotometry Using Hemispherical Geometry" erfolgt und die Dicke des Substrats ohne Beschichtung 3 mm aufweist.

Im Rahmen der vorliegenden Erfindung steht der Begriff "Silika-Mikropartikel" für ganz oder teilweise vernetze Strukturen auf Siliciumdioxid (SiO₂)- Basis mit einem mittleren Teilchendurchmesser (Teilchengröße) von 2 bis 15 µm, bevorzugt 3 bis 10 µm, gemessen nach der Laserstreulicht Methode. Die Silika-Mikropartikel können oberflächenbehandelt (z.B. mit Wachs) oder nicht modifiziert sein. Bevorzugt sind nicht modifizierte (d.h. nicht oberflächenbehandelte) Silika-Mikropartikel. Silika-Mikropartikel sind käuflich erhältlich, z.B. Gasil HP 230 der Firma INEOSSilicas Limited mit einer Teilchengröße von 3,6 µm und einem Porenvolumen von 1,6 ml/g.

Bei den Silika-haltigen Kratzfestbeschichtungen K handelt es sich um Beschichtungen erhältlich aus Formulierungen eines Silika-Mikropartikel haltigen kratzfesten bzw. abriebsbeständigen Lackes, beispielsweise eines Silika-haltigen Hybridlackes, wie z.B. einem Siloxanlack (Sol-Gel-Lack), durch Fluten, Tauchen, Sprühen, Aufwalzen oder Aufschleudern.

Hybridlacke im Sinne der vorliegenden Erfindung basieren auf der Verwendung von Hybridpolymeren als Bindemittel. Hybridpolymere (Hybride: lat. "von zweierlei Herkunft") sind polymere Werkstoffe, die Struktureinheiten verschiedener Materialklassen auf molekularer Ebene in sich vereinen. Durch ihren Aufbau können Hybridpolymere völlig neuartige Eigenschaftskombinationen aufweisen. Im Unterschied zu Verbundwerkstoffen (definierte Phasengrenzen, schwache Wechselwirkungen zwischen den Phasen) und Nanokompositen (Verwendung nanoskaliger Füllstoffe) sind die Struktureinheiten von Hybridpolymeren auf molekularer Ebene miteinander verknüpft. Dies gelingt durch chemische Verfahren wie z. B. den Sol-Gel-Prozess, mit dem anorganische Netzwerke aufgebaut werden können. Durch den Einsatz von organisch reaktiven Precursoren, z. B. organisch modifizierten Metall-Alkoxiden können zusätzlich organische Oligomer/Polymerstrukturen erzeugt werden. Oberflächenmodifizierte Nanopartikel enthaltende Acrylatlacke, die nach der Härtung ein organisch/anorganisches Netzwerk bilden, werden ebenfalls als Hybridlack definiert. Es gibt thermisch härtbare und UV-härtbare Hybridlacke.

Sol-Gel-Lacke im Sinne der vorliegenden Erfindung sind Silika-haltige Lacke, die nach dem Sol-Gel-Prozess hergestellt werden. Der Sol-Gel-Prozess ist ein Verfahren zur Synthese nichtmetallischer anorganischer oder hybridpolymerer Materialien aus kolloidalen Dispersionen, den sogenannten Solen.

Beispielsweise können solche Sol-Gel-Beschichtungslösungen durch Hydrolyse wässriger Dispersionen von kolloidem Siliziumdioxid und einem Organoalkoxysilan und/oder einem Alkoxysilan oder Mischungen aus Organoalkoxysilanen der allgemeinen Formel RSi(OR')₃ und/oder Alkoxysilanen der allgemeinen Formeln Si(OR')₄ herstellt werden, wobei in den Organoalkoxysilan(en) der allgemeinen Formel RSi(OR')₃ R für einen monovalenten C₁ bis C₆ - Alkyl-Rest oder für einen ganz oder teilweise fluorierten C₁ - C₆ - Alkylrest, für eine Vinyl- oder eine Allyl-Einheit, einen Arylrest oder für ein C₁ - C₆ Alkoxygruppe steht. Besonders bevorzugt ist R eine C₁ bis C₄-Alkylgruppe, eine Methyl-, Ethyl-, n-Propyl-, iso-Propyl-, tert.-Butyl-, sek.-Butyl- oder n-Butylgruppe, eine Vinyl-, Allyl-, Phenyl- oder substituierte Phenyleinheit. Die -OR' sind unabhängig voneinander ausgewählt aus der Gruppe enthaltend C₁ bis C₆ - Alkoxygruppen, eine Hydroxygruppe, eine Formyleinheit und eine Acetyl-Einheit. Sol-Gel-Polysiloxanlacke fallen teilweise auch unter die Definition eines Hybridlackes.

Das kolloide Siliziumdioxid ist beispielsweise als z.B. Levasil 200 A (HC Starck), Nalco 1034A (Nalco Chemical Co), Ludox AS-40 oder Ludox LS (GRACE Davison) erhältlich. Als Organoalkoxysilane seien beispielhaft folgende Verbindungen genannt: 3,3,3-Trifluoropropyltrimethoxysilan, Methyltrimethoxysilan, Methyltrihydroxysilan, Methyltriethoxysilan, Ethyltrimethoxysilan, Methyltriacetoxysilan, Ethyltriethoxysilan, Phenyltrialkoxysilan (z.B. Phenyltriethoxysilan und Phenyltrimethoxysilan) und Mischungen daraus. Als Alkoxysilane seien beispielhaft folgende Verbindungen genannt: Tetramethoxysilan und Tetraethoxysilan und Mischungen daraus.

Als Katalysatoren können beispielsweise organische und/oder anorganische Säuren oder Basen verwendet werden.

In einer Ausführungsform können die kolloiden Siliziumdioxidpartikel auch durch Vorkondensation ausgehend von Alkoxysilanen in situ gebildet werden (siehe hierzu "The Chemistry of Silica", Ralph K. Iler, John Wiley & Sons, (1979), p. 312-461).

Die Hydrolyse der Sol-Gel-Lösung wird durch Zugabe von Lösungsmitteln, bevorzugt alkoholischen Lösungsmitteln wie z.B. Isopropanol, n-Butanol, Isobutanol oder Mischungen daraus, abgebrochen bzw. stark verlangsamt. Anschließend werden ein bzw. mehrere UV-Absorber, die optional in einem Lösungsmittel vorgelöst sind, zu der Sol-Gel Beschichtungslösung gegeben, wonach ein Alterungsschritt von wenigen Stunden oder mehreren Tagen/Wochen eintritt.

Des weiteren können noch weitere Additive und/oder Stabilisatoren wie beispielsweise Verlaufsmittel, Oberflächenadditive, Verdickungsmittel, Pigmente, Farbstoffe, Härtungskatalysatoren, IR-Absorber und/oder Haftvermittler zugesetzt werden. Auch die Verwendung von Hexamethyl-disilazan oder vergleichbaren Verbindungen, die zu einer reduzierten Rissanfälligkeit der Beschichtungen führen können, ist möglich (vgl. auch WO 2008/109072 A). Bevorzugt ist die Kratzfestbeschichtung aus einem Lack bzw. Sol-Gel Lack erhältlich, der keine polymeren Organosilioxane enthält. Besonders bevorzugte Kratzfestbeschichtungen sind aus den oben genannten Sol-Gel-Beschichtungslösungen hergestellt. Thermische, UV-stabilisierte silika-haltige Sol-Gel-Lacke sind beispielsweise von der Momentive Performance Materials GmbH unter den Produktbezeichnungen AS4000® und AS4700® erhältlich.

Ein möglicher thermisch härtbarer Hybridlack ist der PHC587B^{®} oder PHC587C^{®} (Momentive Performance Materials GmbH), siehe hierzu auch EP-A 0 570 165. Die Schichtdicke sollte zwischen 1 bis 20 µm, bevorzugt 3 bis 16 µm und besonders bevorzugt 8 bis 14 µm betragen.

Als silika-haltige Kratzfestbeschichtungen sind auch UV-härtbare, Silika - Nanopartikel-haltige Acrylatlacke, wie sie in WO 2008/071363 A oder DE-A 2804283 beschrieben werden, zu verwenden. Ein kommerziell erhältliches System ist der UVHC3000^{®} (Momentive Performance Materials GmbH).

Die Schichtdicke der Kratzfestbeschichtung liegt bevorzugt im Bereich von 1 bis 25 µm, besonders bevorzugt von 4 bis 16 µm und ganz besonders bevorzugt von 8 bis 15 µm.

Bei den Substraten (S) handelt es sich bevorzugt um eine Substratschicht, beispielsweise um Platten, Scheiben oder Folien oder sonstige flächige Substrate, aus transparenten, bevorzugt flammwidrigen und/oder Flammschutzmittel enthaltenden thermoplastischen Polymeren. Das Substrat kann auch aus mehreren solcher Substratschichten bestehen. Die thermoplastischen Polymere sind bevorzugt ausgewählt aus einem oder mehreren Polymeren aus der Gruppe enthaltend Polycarbonate, Copolycarbonate (Copolymere enthaltend Polycarbonatbausteine), Polyacrylate, insbesondere Polymethylmethacrylat, Cycloolefincopolymere, Polyester, insbesondere Polyethylentherephthalat, Poly(styrol-co-acrylnitril) oder Mischungen dieser Polymere.

"Transparent" bedeutet im Sinne dieser Erfindung, dass das unbeschichtete Polymersubstrat eine Transmission von mindestens 75%, bevorzugt 80% und ganz besonders bevorzugt mehr als 85% im Bereich des sichtbaren Spektrums (550 bis 750 nm) aufweist, wobei die Transmissionsbestimmung nach ASTM E 1348: "Standard Test Method for Transmittance and Color by Spectrophotometry Using Hemispherical Geometry" erfolgt und die Dicke des Substrats ohne Beschichtung 3 mm aufweist.

Als transparente thermoplastische Polymere werden bevorzugt Polycarbonat und/oder Polymethylmethacrylate sowie Blends enthaltend mindestens einen der beiden Thermoplasten eingesetzt. Besonders bevorzugt wird Polycarbonat eingesetzt. Polycarbonat ist als thermoplastisch verarbeitbarer Kunststoff bekannt. Die Polycarbonat-Kunststoffe sind vorwiegend aromatische Polycarbonate auf Basis von Bisphenolen. Es können lineare oder verzweigte Polycarbonate oder Mischungen aus linearen und verzweigten Polycarbonaten, vorzugsweise auf Basis von Bisphenol-A eingesetzt werden. Die in den erfindungsgemäßen Artikeln einzusetzenden linearen bzw. verzweigten Polycarbonate und Copolycarbonate haben im Allgemeinen mittlere Molekulargewichte M̅_{w} (Gewichtsmittel) von 2 000 bis 200 000 g/mol, bevorzugt 3 000 bis 150 000 g/mol, insbesondere 5 000 bis, 100 000 g/mol, ganz besonders bevorzugt 8 000 bis 80 000 g/mol, insbesondere 12 000 bis 70 000 g/mol (bestimmt mittels Gelpermeationschromatographie mit Polycarbonat-Eichung).

Sie haben in diesem Rahmen weiterhin bevorzugt mittlere Molekulargewichte mit einem Gewichtsmittel von M̅w von 16.000 bis 40.000 g/mol.

Das eingesetzte thermoplastische Polymer, insbesondere Polycarbonat bzw. die eingesetzte Polycarbonatmischung weist bevorzugt einen MVR (Melt Volume Rate) von 10 bis 45, bevorzugt von 20 bis 40 und besonders bevorzugt von 16 bis 36 (bei 300 °C und 1,2 kg nach ISO 1133) auf.

Zur Herstellung von Polycarbonaten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren.

Die Polycarbonate sind durch Zusatz von einem oder mehreren Flammschutzadditiven flammfest ausgerüstet.

Neben den weiter unten beschriebenen Flammschutzmitteln können die thermoplastischen Kunststoffe weitere Additive enthalten, beispielsweise die für diese Thermoplasten üblichen Additive wie Füllstoffe, UV-Stabilisatoren, Thermostabilisatoren, Antistatika und Pigmente in den üblichen Mengen, gegebenenfalls können das Entformungsverhalten und das Fließverhalten noch durch Zusatz externer Entformungsmittel und Fließmittel verbessert werden (z. B. niedermolekulare Carbonsäureester, Kreide, Quarzmehl, Glas- und Kohlenstofffasern, Pigmente und deren Kombination). Für Polycarbonat üblicherweise verwendete Additive werden z. B. in WO 99/55772, S. 15 - 25, EP 1 308 084 und in den entsprechenden Kapiteln des "Plastics Additives Handbook", ed. Hans Zweifel, 5th Edition 2000, Hanser Publishers, Munich beschrieben.

Die Substrate (S) im Sinne der vorliegenden Erfindung können auch mehrere Schichten aus den oben genannten thermoplastischen Kunststoffen umfassen.

Die thermoplastischen Substrate lassen sich aus den thermoplastischen Kunststoffen über übliche thermoplastische Verarbeitungsverfahren herstellen, beispielweise mittels Einkomponenten - oder Mehrkomponentenspritzgießverfahren, Extrusion, Coextrusion oder Laminierung.

Die Dicke der thermoplastischen Substrate hängt von der Art der Anwendung ab. Für einen Bildschirm ist eine Dicke im Bereich von 1- 10 mm, bevorzugt 1 - 5 mm, besonders bevorzugt 2 - 3 mm üblich. In anderen Anwendungen werden auch dickere oder dünnere Substrate eingesetzt. Für Automobilverscheibungen werden bevorzugt Substratstärken von ca. 3 mm eingesetzt.

Geeignete Flammschutzmittel im Sinne der vorliegenden Erfindung sind unter anderem Alkali- bzw. Erdalkalisalze von aliphatischen bzw. aromatischen Sulfonsäure-, Sulfonamid- und Sulfonimidderivaten z.B. Kaliumperfluorbutansulfonat, Kaliumdiphenyl-sulfonsulfonat, N-(p-tolylsulfonyl-)-p-toluolsulfimid-Kaliumsalz, N-(N'-Benzylaminocarbonyl)-sulfanylimid-Kaliumsalz.

Salze, die gegebenenfalls in den erfindungsgemäßen Formmassen verwendet werden können, sind beispielsweise: Natrium- oder Kaliumperfluorbutansulfat, Natrium- oder Kaliumperfluormethansulfonat, Natrium- oder Kaliumperfluoroctansulfat, Natrium-oder Kalium-2,5-dichlorbenzolsulfat, Natrium- oder Kalium-2,4,5-trichlorbenzolsulfat, Natrium- oder Kalium-methylphosphonat, Natrium- oder Kalium-(2-phenyl-ethylen)-phosphonat, Natrium- oder Kaliumpentachlorbenzoat, Natrium- oder Kalium-2,4,6-trichlorbenzoat, Natrium-oder Kalium-2,4-dichlorbenzoat, Lithium-phenylphosphonat, Natrium- oder Kalium-diphenylsulfon-sulfonat, Natrium- oder Kalium-2-formylbenzolsulfonat, Natrium- oder Kalium-(N-benzolsulfonyl)-benzolsulfonamid. Trinatrium- oder Trikalium-hexafluoroaluminat, Dinatrium- oder Dikalium-hexafluorotitanat, Dinatrium- oder Dikalium-hexafluorosilikat, Dinatrium- oder Dikalium-hexafluorozirkonat, Natrium- oder Kalium-pyrophosphat, Natrium- oder Kaliummetaphosphat, Natrium- oder Kalium-tetrafluoroborat, Natrium- oder Kalium-hexafluorophosphat, Natrium- oder Kalium- oder Lithiumphosphat, N-(p-tolylsulfonyl-)-p-toluolsulfimid-Kaliumsalz, N-(N'-Benzylaminocarbonyl)-sulfanylimid-Kaliumsalz.

Bevorzugt werden Natrium- oder Kaliumperfluorbutansulfat, Natrium- oder Kalium-diphenylsulfonsulfonat und Natrium- oder Kalium-2,4,6-trichlorbenzoat und N-(p-tolylsulfonyl-)-p-toluolsulfimid-Kaliumsalz, N-(N'-Benzylaminocabonyl)-sulfanylimid-Kaliumsalz. Ganz besonders bevorzugt sind Kalium-nona-fluor-1-butansulfonat und Natrium- oder Kalium-diphenylsulfonsulfonat. Kalium-nonafluor-1-butansulfonat ist u.a. als Bayowet^{®} C4 (Firma Lanxess, Leverkusen, Deutschland, CAS-Nr. 29420-49-3), RM64 (Firma Miteni, Italien) oder als 3M™ Perfluorobutanesulfonyl FR 2025 (Firma 3M, USA) kommerziell erhältlich. Ebenfalls sind Mischungen der genannten Salze geeignet.

Diese organischen Flammschutzsalze werden in Mengen von 0,01 Gew.-% bis 1,0 Gew.-%, vorzugsweise 0,01 Gew.-% bis 0,8 Gew.-%, besonders bevorzugt 0,01 Gew.-% bis 0,6 Gew.-% jeweils bezogen auf die Gesamtzusammensetzung in den Formmassen eingesetzt.

Als weitere Flammschutzmittel kommen z.B. phosphorhaltige Flammschutzmittel ausgewählt aus den Gruppen der Mono- und oligomeren Phosphor- und Phosphonsäureester, Phosphonätamine, Phosphonate, Phosphinate, Phosphite, Hypophosphite, Phosphinoxide und Phosphazene, wobei auch Mischungen von mehreren Komponenten ausgewählt aus einer oder verschiedenen dieser Gruppen als Flammschutzmittel zum Einsatz kommen können, in Frage. Auch andere hier nicht speziell erwähnte vorzugsweise halogenfreie Phosphorverbindungen können alleine oder in beliebiger Kombination mit anderen vorzugsweise halogenfreien Phosphorverbindungen eingesetzt werden. Hierzu zählen auch rein anorganische Phosphorverbindungen wie Borphosphathydrat. Des weiteren kommen als phosphorhaltige Flammschutzmittel Phosphonatamine in Betracht. Die Herstellung von Phosphonataminen ist beispielsweise in US-Patentschrift 5,844,028 beschrieben. Phosphazene und deren Herstellung sind beispielsweise in EP-A 728 811 und WO 97/40092 beschrieben. Auch können Siloxane, phosphorylierte Organosiloxane, Silicone oder Siloxysilane als Flammschutzmittel Verwendung finden, was beispielsweise in der EP 1 342 753, in der DE 10257079A sowie in der EP 1 188 792 näher beschrieben wird.

Im Rahmen der vorliegenden Erfindung sind Phosphorverbindungen der allgemeinen Formel (4) bevorzugt, 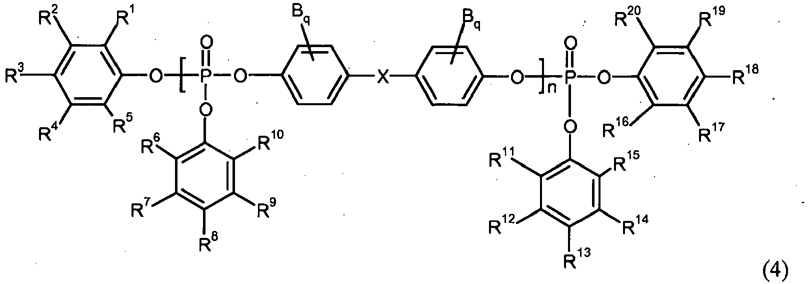 worin
R¹ bis R²⁰ unabhängig voneinander Wasserstoff, eine lineare oder verzweigte Alkylgruppe mit bis zu 6 C-Atomen
n einen Durchschnittswert von 0,5 bis 50 und
B jeweils C₁-C₁₂-Alkyl, vorzugsweise Methyl, oder Halogen, vorzugsweise Chlor oder Brom
q jeweils unabhängig voneinander 0, 1 der 2,
X eine Einfachbindung, C=O, S, O, SO₂, C(CH₃)₂, C₁-C₅-Alkylen, C₂-C₅-Alkyliden, C₅-C₆-Cycloalkyliden, C₆-C₁₂-Arylen, an das weitere aromatische gegebenenfalls Heteroatome enthaltende Ringe kondensiert sein können, oder einen Rest der Formel (5) oder (6) 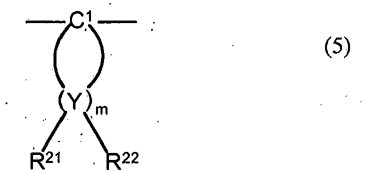 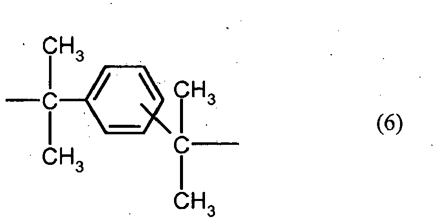
mit Y Kohlenstoff und
R²¹ und R²² für jedes Y individuell wählbar, unabhängig voneinander Wasserstoff oder C₁-C₆-Alkyl, vorzugsweise Wasserstoff, Methyl oder Ethyl,
m eine ganze Zahl von 4 bis 7, bevorzugt 4 oder 5,
mit der Maßgabe, dass an mindestens einem Atom Y R²¹ und R²² gleichzeitig Alkyl sind, bedeuten. Insbesondere bevorzugt sind solche Phosphorverbindungen der Formel (4), in denen R1 bis R20 unabhängig voneinander Wasserstoff oder einen Methylrest bedeuten und bei denen q = 0 ist. Insbesondere bevorzugt sind Verbindungen, in denen X SO₂, O, S, C=O, C₂-C₅-Alkyliden, C₅-C₆-Cycloalkyliden oder C₆-C₁₂-Arylen bedeutet. Verbindungen mit X = C(CH₃)₂ sind ganz besonders bevorzugt.

Der Oligomerisierungsgrad n ergibt sich als Durchschnittswert aus dem Herstellverfahren der aufgeführten phosphorhaltigen Verbindungen. Der Oligomerisierungsgrad liegt hierbei in der Regel bei n <10. Bevorzugt sind Verbindungen mit n von 0,5 bis 5,0, besonders bevorzugt 0,7 bis 2,5. Ganz besonders bevorzugt sind Verbindungen, die einen hohen Anteil an Molekülen mit n = 1 zwischen 60% und 100%, bevorzugt zwischen 70 und 100 %, besonders bevorzugt zwischen 79 % und 100 % aufweisen. Herstellbedingt können die obigen Verbindungen auch geringe Mengen an Triphenylphosphat enthalten. Die Mengen an dieser Substanz liegen meist unter 5 Gew.-%, wobei im vorliegenden Zusammenhang Verbindungen bevorzugt sind, deren Triphenylphosphatgehalt im Bereich von 0 bis 5 Gew.-%, bevorzugt von 0 bis 4 % Gew.-%, besonders bevorzugt von 0,0 bis 2,5 Gew.-%, bezogen auf die Verbindung der Formel (4) liegt.

Im Rahmen der vorliegenden Erfindung werden die Phosphorverbindungen der Formel (4) in Mengen von 1 Gew.-%, bis 30 Gew.-%, bevorzugt 2 Gew.-%, bis 20 Gew.-%, besonders bevorzugt 2 Gew.-%, bis 15 Gew.-%, jeweils bezogen auf die Gesamtzusammensetzung eingesetzt.

Die genannten Phosphorverbindungen sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Besonders bevorzugt ist im Rahmen der vorliegenden Erfindung Bisphenol-A-diphosphat. Bisphenol-A-diphosphat ist u.a. als Reofos^{®} BAPP (Firma Chemtura, Indianapolis, USA), NcendX^{®} P-30 (Firma Albemarle, Baton Rouge, Louisiana, USA), Fyrolflex^{®} BDP (Firma Akzo Nobel, Arnheim, Niederlande) oder CR 741^{®} (Firma Daihachi, Osaka, Japan) kommerziell erhältlich.

Die Herstellung dieser Flammschutzmittel ist z.B. auch in US-A 2002/0038044 beschrieben.

Weitere Phosphorsäureester, die im Rahmen der vorliegenden Erfindung eingesetzt werden können, sind zudem Triphenylphosphat, welches unter anderem als Reofos^{®} TPP (Firma Chemtura), Fyrolflex^{®} TPP (Firma Akzo Nobel) oder Disflamoll^{®} TP (Firma Lanxess) angeboten wird und Resorcindiphosphat. Resorcoindiphosphat läßt sich als Reofos RDP (Firma Chemtura) oder Fyrolflex^{®} RDP (Firma Akzo Nobel) käuflich erwerben.

Weitere geeignete Flammschutzmittel im Sinne der vorliegenden Erfindung sind halogenhaltige Verbindungen. Hierzu zählen bromierte Verbindungen wie bromierte Oligocarbonate (z.B. Tetrabrombispheilol-A oligocarbonat BC-52^{®}, BC-58^{®}, BC-52HP^{®} der Firma Chemtura), Polypentabrombenzylacrylate (z.B. FR 1025 der Firma Dead Sea Bromine (DSB)), oligomere Umsetzungsprodukte aus Tetrabrom-bisphenol-A mit Expoxiden (z.B. FR 2300 und 2400 der Firma DSB), oder bromierte Oligo- bzw. Polystyrole (z.B. Pyro-Chek^{®} 68PB der Firma Ferro Corporation, PDBS 80 und Firemaster^{®} PBS-64HW der Firma Chemtura).

Besonders bevorzugt im Rahmen dieser Erfindung sind bromierte Oligocarbonate auf Basis Bisphenol A, insbesondere Tetrabrombisphenol-A oligocarbonat.

Im Rahmen der vorliegenden Erfindung werden bromhaltige Verbindungen in Mengen von 0,1 Gew.-% bis 30,0 Gew.-%, bevorzugt 0,1 Gew.-% bis 20,0 Gew.-%, besonders bevorzugt 0,1 Gew.-% bis 10,0 Gew.-% und ganz besonders bevorzugt 0,1 Gew.-% bis 5,0 Gew.-% jeweils bezogen auf die Gesamtzusammensetzung eingesetzt.

Den thermoplastischen Polymeren für die Polymersubstrate können noch jeweils für diese Thermoplasten übliche Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder weitere Eigenschaften noch durch Zusatz externer Entformungsmittel, Fließmittel, und/oder anderer Additive beeinflusst werden. Als Additive geeignete Verbindungen werden z. B. in WO 99/55772, S. 15 - 25, EP 1 308 084 und in den entsprechenden Kapiteln des "Plastics Additives Handbook", ed. Hans Zweifel, 5th Edition 2000, Hanser Publishers, Munich beschrieben.

Erfindungsgemäße, flammgeschützte Polycarbonate sind beispielsweise von der Firma Bayer MaterialScience, Leverkusen unter dem Namen Makrolon^{®} 6001, Makrolon^{®} 6557; Makrolon^{®} 6555, oder Makrolon^{®} 6485 kommerziell erhältlich.

Die erfindungsgemäßen beschichteten Artikel besitzen hervorragende Flammschutzeigenschaften in Kombination mit einer matten Oberfläche und guter Transmission und sehr guter Abriebbeständigkeit. "Regenbogeneffekte" sind bei Schichtdicken größer 10 µm nicht zu beobachten. In besonders bevorzugten Ausführungsformen besteht das Material für die Polymersubstrate aus flammgeschütztem Polycarbonat, das Schmelzviskositätswerte (Melt Volume Rate MVR in cm³/10 min) > 9 (bei 300 °C und 1,2 kg nach ISO 1133), besonders bevorzugt einen MVR > 20 (bei 300 °C und 1,2 kg nach ISO 1133) und ganz besonders bevorzugt einen MVR > 30 (bei 300 °C und 1,2 kg nach ISO 1133) aufweist.

Flammschutzeigenschaften lassen sich beispielsweise durch eine oder mehrere der folgenden Flammschutzprüfungen bestimmen:
Die Flammwidrigkeit von Kunststoffen wird gängigerweise nach der Methode UL94V Underwriters Laboratories Inc. Standard of Safety, "Test for Flammability of Plastic Materials for Parts in Devices and Appliances", S14 ff, Northbrook 1998; J. Troitzsch, "International Plastics Flammability Handbook", S. 346 ff., Hanser Verlag, München 1990 bestimmt. Bewertet werden hierbei Nachbrennzeiten und Abtropfverhalten von ASTM-Normprüfkörpern.

Für die Einstufung eines flammgeschützten Kunststoffs in die Brandklasse UL94V-0 müssen im einzelnen die folgenden Kriterien erfüllt sein: bei einem Satz von 5 ASTM Normprüfkörpern (Maße: 127 x 12,7 x X, mit X = Dicke des Prüfkörpers, z.B. 3,2; 3,0; 1,5; 1,0 oder 0,75 mm) dürfen alle Proben nach zweimaliger Beflammung von 10 Sekunden Dauer mit einer offenen Flamme definierter Höhe nicht länger als 10 Sekunden nachbrennen.

Die Summe der Nachbrennzeiten bei 10 Beflammungen von 5 Proben darf nicht größer als 50 Sekunden sein. Zudem darf kein brennendes Abtropfen, vollständiges Abbrennen oder Nachglühen des jeweiligen Prüfkörpers von länger als 30 Sekunden erfolgen. Die Einstufung UL94V-1 verlangt, dass die Einzelnachbrennzeiten nicht länger als 30 Sekunden betragen und dass die Summe der Nachbrennzeiten von 10 Beflammungen von 5 Proben nicht größer als 250 Sekunden ist. Die Gesamtnachglühzeit darf nicht mehr als 250 Sekunden betragen. Die übrigen Kriterien sind identisch mit den oben erwähnten. Eine Einstufung in die Brandklasse UL94V-2 erfolgt dann, wenn es bei Erfüllen der übrigen Kriterien der UL94V-1 Einstufung zu einem brennenden Abtropfen kommt.

Die Brennbarkeit von Prüfkörpern kann darüber hinaus auch durch die Bestimmung des Sauerstoffindex (LOI nach ASTM D 2863-77) beurteilt werden.

Eine weitere Prüfung der Flammwidrigkeit besteht in der Glühdrahtprüfung nach DIN IEC 695-2-1. Hierbei wird an 3 Prüfkörpern in Folge (beispielsweise an Platten der Geometrie 60 x 60 x 2 mm oder 1 mm) mit Hilfe eines glühenden Drahtes bei Temperaturen zwischen 550 und 960°C die maximale Temperatur ermittelt, bei der eine Nachbrennzeit von 30 Sekunden nicht überschritten wird und die Probe nicht brennend abtropft. Diese Prüfung ist besonders im Bereich Elektro/Elektronik von Interesse, da Bauelemente in elektronischen Erzeugnissen im Fehlerfall oder bei Überlastung derart hohe Temperaturen annehmen können, dass sich Teile in unmittelbarer Nähe entzünden können. In der Glühdrahtprüfung wird eine solche thermische Beanspruchung nachempfunden.

In einer speziellen Form des Glühdrahttests, dem Glow-Wire-Ignition-Test nach IEC 60695-1-13 liegt das Hauptaugenmerk auf dem Entzündungsverhalten des Prüfkörpers. Hierbei darf sich die Probe während des Prüfvorgangs nicht entzünden, wobei Entzündung als Flammenerscheinung länger als 5 Sekunden definiert ist. Ein brennendes Abtropfen der Probe ist nicht zulässig.

Die erfindungsgemäßen Artikel bestehen eine oder mehrere der vorgenannten Flammschutzprüfungen und verfügen außerdem über weitere vorteilhafte Eigenschaften, insbesondere in Bezug auf Kratz- und Abriebsfestigkeit, Transmission / Transparenz und Regenbogeneffekte.

Die beschichteten Artikel sind hochtransparent. Insbesondere weisen sie bei 3 mm Schichtdicke und einer Wellenlänge von 550 nm eine Transmission von mindestens 88 %, bevorzugt mehr als 89 % und in ganz besonders bevorzugten Fällen mehr als 89,5 % oder mehr als 90 % auf und bei einer Wellenlänge von 700 nm eine Transmission von mindestens 90 %, bevorzugt mehr als 91 % und in ganz besonders bevorzugten Fällen mehr als 91,5 % oder mehr als 92 % auf.

In Kombination mit dieser Transparenz weisen die beschichteten Artikel noch gute Abriebsbeständigkeiten, sowie erhöhte Flammwidrigkeitswerte auf.

Hinsichtlich Abriebbeständigkeit werden nach dem Abrasionstest (DIN 53 754) bei 1000 Umdrehungen der Schleifräder Werte von weniger als 15 % Haze (Δ Haze₁₀₀₀), insbesondere weniger als 10%, und ganz besonders weniger als 5% erhalten.

Hinsichtlich Flammwidrigkeit analog Norm UL 94 V erhalten mindestens 70% der Einzelproben eine V-1 - oder bessere Bewertung, bevorzugt erhalten 80% der Proben eine V-1 - oder bessere Bewertung besonders bevorzugt erhalten 90% der Proben eine V-1 - oder bessere Bewertung, ganz besonders bevorzugt erhalten 100% der Proben eine V-1 - oder bessere Bewertung.

Der erfindungsgemäße Artikel ist somit dadurch gekennzeichnet, dass er bei einer Wellenlänge von 550 nm eine Transmission gemessen nach ASTM E 1348 von mindestens 88 %, bevorzugt mehr als 89 % und in ganz besonders bevorzugten Fällen mehr als 89,5 % oder mehr als 90 % auf und bei einer Wellenlänge von 700 nm eine Transmission gemessen nach ASTM E 1348 von mindestens 90 %, bevorzugt mehr als 91 % aufweist; im Abrasionstest gemessen nach DIN 53 754 Werte von weniger als 15 % Haze (Δ Haze₁₀₀₀), insbesondere weniger als 10%, und ganz besonders weniger als 5% aufweist und in der Flammwidrigkeitsprüfung nach der Norm UL 94 V mit einer Wahrscheinlichkeit von 70% eine V1 - oder bessere Bewertung, insbesondere mit einer Wahrscheinlichkeit von 80% eine V1 - oder bessere Bewertung, besonders bevorzugt mit einer Wahrscheinlichkeit von 90% eine V1 - oder bessere Bewertung, ganz besonders bevorzugt mit einer Wahrscheinlichkeit von 100% eine V1 - oder bessere Bewertung erhält.

Die erfindungsgemäßen Artikel können daher beispielsweise zur ökonomischen Herstellung von Flachbildschirmen, wobei Rahmen und Bildfläche gegebenenfalls in einem einzigen Spritzguss -Prozess hergestellt werden können, eingesetzt werden. Die Erfindung lässt sich außerdem auch für andere Glazing-Anwendungen nutzen, wie z.B. Gebäudeverscheibungen (Architectural Glazing) und Automobilverscheibungen (Automotive Glazing).

### Beispiele

### A) die Substrate

### Beispiel 1: Herstellung eines flammgeschützten Polycarbonats mit hohem MVR-Wert

Für die Herstellung der Zusammensetzung, die in den Beispielen 6 bis 10 eingesetzt wurden, wurden folgende thermoplastischen Polymere eingesetzt:
Makrolon® 2408 ist ein kommerziell von der Firma Bayer MaterialScience AG erhältliches Bisphenol-A basiertes Polycarbonat. Makrolon® 2408 hat EU-/FDA-Qualität und enthält keinen UV-Absorber. Die Schmelze-Volumenfließrate (MVR) nach ISO 1133 beträgt 19 cm³/(10 min) bei 300 °C und 1,2 kg Belastung.
Makrolon® LED2245 ist ein kommerziell von der Firma Bayer MaterialScience AG erhältliches lineares Bisphenol-A basiertes Polycarbonat. Makrolon® LED2245 hat EU-/FDA-Qualität und enthält keinen UV-Absorber. Die Schmelze-Volumenfließrate (MVR) nach ISO 1133 beträgt 35 cm³/(10 min) bei 300 °C und 1,2 kg Belastung.

Es wurden folgende Additive eingesetzt:
"C4" = Bayowet® C4 ist ein kommerziell bei der Firma Lanxess AG erhältliches Kalium-nona-fluor-1-butansulfonat.

Die flammgeschützten thermoplastischen Zusammensetzungen gemäß der vorliegenden Erfindung werden in einer Vorrichtung umfassend a) eine Dosiereinrichtung für die Komponenten, b) einem gleichlaufenden Zweiwellenkneter (ZSK 25 von der Firma Werner & Pfleiderer) mit einem Schneckendurchmesser von 25 mm c) einer Lochdüse zur Ausformung von Schmelzesträngen d) einem Wasserbad zur Abkühlung und dem Verfestigen der Stränge und einem Granulator compoundiert.

Die thermoplastische Polymerzusammensetzung für das Substrat in den Beispielen 6 bis 10 wurde hergestellt, indem 10 Gew.-% einer Pulvermischung aus 99,35 Gew.-% pulverförmigem Makrolon® 2408 mit 0,65 Gew.-% Flammschutzmittel C4 zu 90 Gew.-% Makrolon LED® 2245 Granulat zudosiert wird.

Dabei wurden folgende Verfahrensparameter eingestellt:

| **Verfahrensparameter** | |
|---|---|
| Masse-Temperatur | 272 °C |
| Drehzahl Extruder | 99 min⁻¹ |
| Drehmoment in % | 37-45 % |
| Druck Düse | 19 bar |
| Düsenbohrung | 1x 4 mm |
| Gehäusetemperatur Gehäuse 1: | 54 °C |
| Gehäusetemperatur Gehäuse 2: | 220 °C |
| Gehäusetemperatur Gehäuse 3: | 240 °C |
| Gehäusetemperatur Gehäuse 4: | 260 °C |
| Gehäusetemperatur Gehäuse 5: | 260 °C |
| Gehäusetemperatur Gehäuse 6: | 260 °C |
| Gehäusetemperatur Gehäuse 7: | 260 °C |
| Gehäusetemperatur Gehäuse 8: | 260 °C |
| Gehäusetemperatur Kopf 13: | 260 °C |

Es wurde ein leichtfließendes Bisphenol-A Polycarbonat mit einem MVR (300°C/1,2kg) von 36 cm³/10 min erhalten (gemessen nach ISO 1133) (Substrat).

### Beispiel 2: Herstellung eines flammgeschützten Polycarbonats mit niedrigem MVR-Wert

Es wurden Platten aus Makrolon^{®} 6555 (Bisphenol A-Polycarbonat der Fa. Bayer MaterialScience AG, mittelviskos: MVR (300°C/1,2kg) 10 cm³/10 min, mit Chlor- und Brom freier Flammschutzausrüstung) hergestellt, in dem die Granulate jeweils zu plattenförmigen Probekörpern der Geometrie 100 * 150 * 2 mm und 100 * 150 * 3 mm verarbeitet wurden. Dies geschieht mit einer Arburg Allrounder 270S-500-60 mit einem Schneckendurchmesser von 18 mm. Dabei werden folgende Verfahrensparameter eingestellt:

| **Verfahrensparameter** | |
|---|---|
| Massetemperatur | 300 °C |
| Werkzeugtemperatur | 90 °C |
| Einspritzgeschwindigkeit | 40 mm/s |
| Staudruck | 150 bar |

### Beispiel 3: Platten aus der Zusammensetzung Beispiel 6

Analog Beispiel 2 wurden Platten aus dem Bisphenol-A Polycarbonat, MVR (300°C/1,2kg nach ISO 1133) 35 cm³/10 min, mit bromfreier Flammschutzausrüstung des Beispiels 1 hergestellt.

| **Verfahrensparameter** | |
|---|---|
| Massetemperatur | 280 °C |
| Werkzeugtemperatur | 90 °C |
| Einspritzgeschwindigkeit | 40 mm/s |
| Staudruck | 150 bar |

### Beispiel 4: UL - Prüfstäbe aus Makrolon^{®} 6555

Mit der gleichen Spritzgießmaschine (Arburg Allrounder 2705-500-60 mit einem Schneckendurchmesser von 18 mm) und gleichen Verfahrensparametern wie in Beispiel 2 wurden verschieden dicke UL - Prüfstäbe: Prüfstabdimensionen: 127 mm * 12,7 mm * D mm (D (mm) = 3,2/2,6/2,2 sowie 2,0) aus Makrolon^{®} 6555 (Bisphenol A-Polycarbonat der Fa. Bayer MaterialScience AG, mittelviskos: MVR (300°C/1,2kg nach ISO 1133) 10 cm³/10 min, mit Chlor- und Brom freier Flammschutzausrüstung) spritzgegossen.

Bei den UL - Prüfstäben handelt es sich um ASTM Normprüfkörper zur UL 94 - Brandklassifizierung.

### Beispiel 5: UL - Prüfstäbe aus der Zusammensetzung Beispiel 1

Analog Beispiel 3 wurden UL - Prüfstäbe aus dem Bisphenol-A Polycarbonat, MVR (300°C/1,2kg) 36 cm³/10 min, mit bromfreier Flammschutzausrüstung, des Beispiels 1 hergestellt.

### B) Herstellung und Ausprüfung der beschichteten Artikel

### a) Verwendete Kratzfestlacke

PHC587^{®} ist kommerziell erhältlich von der Momentive Performance Materials GmbH, Deutschland und ist eine wetterbeständige und Abrieb-resistente Silika-enthaltende Kratzfestlack-Formulierung mit organischen Bestandteilen mit einem Silika- Feststoffgehalt von 20 +/- 1 Gew.-% in einem Lösemittelgemisch von Methanol, n-Butanol und Isopropanol.

Der Kratzfestlack kann ohne Primerzwischenschicht auf Polycarbonat Substrate beschichtet werden. In den hier beschriebenen durchgeführten Beispielen erfolgte die Beschichtung mittels Tauchen.

Nach der Beschichtung wird in einem Heißluftofen bei 130°C 60 min. getempert (curing Prozess).

### b) Testmethoden:

Trübung: Die Trübung (Haze) wird nach ASTM D 1003 über Weitwinkel Lichtstreuung ermittelt. Die Angaben erfolgen in % Haze (H), wobei niedrige Werte (z.B. 0,5% H) eine niedrige Trübung und hohe Transparenz bedeuten.

Stahlwolltest: Der Test erfolgte am Testgerät "Abraser" von Byk Gardner, wobei Rakso Stahlwolle Sorte 00 bei einem Auflagegewicht von 150 g verwendet wurde. Es wurden insgesamt 20 Hin- und Rückschube durchgeführt, wobei die Zerkratzung visuell beurteilt wurde.

Transmissionstest: Gerät: Perkin Elmer Lamda 900, Messung der Gesamttransmission

Das **Brandverhalten** wird nach UL 94V an Stäben der Abmessung 127 x 12,7 x 3,0 mm gemessen.

### Beispiel 6: (Vergleich)

Beschichtung von flammgeschützten Makrolon^{®} LED 2245 Platten mit dem 1-Schichtlack PHC 587^{®}

Substrat: Makrolon^{®} LED 2245/C4 Platte, wie in A) beschrieben

Lack: PHC 587 (20%ig in organischem Lösemittel), wie unter B) beschrieben

Lackapplikation: Das Substrat, das auf der Rückseite mit einer Schutzfolie versehen ist, wird durch Tauchen in den PHC 587 Lack beschichtet. Danach lässt man einen Teil des Lösemittels während 30 Minuten bei Raumtemperatur abdampfen. Nach Entfernen der Schutzfolie wird 60 Minuten bei 130°C getempert, wobei auf der Vorderseite und den Kanten eine ca. 5 µm dicke kratzfeste, transparente Lackierung erhalten wird.

Die Ergebnisse sind in der Tabelle 1 zusammenfassend dargestellt.

### Beispiel 7:

Beschichtung von flammgeschützten Makrolon^{®} LED 2245 Platten mit dem 1-Schichtlack PHC 587, der 0,4 Gew.-% des Mattierungsmittels Gasil HP 230 enthält

Substrat: LED 2245/C4 Platte, wie in A) beschrieben.

Lack: Zu 500 g PHC 587 Lack werden 0,4 g Gasil HP 230 eingerührt. Anschließend wird über einen Filter mit der Porengröße 3-5µm filtriert.

Lackapplikation: Analog Beispiel 6.

Die Ergebnisse sind in der Tabelle 1 zusammenfassend dargestellt.

### Beispiel 8:

Beschichtung von flammgeschützten Makrolon^{®} LED 2245 Platten mit 1-Schichtlack PHC 587, der 0,75 Gew.-% des Mattierungsmittels Gasil HP 230 enthält

Substrat: LED 2245/C4 Platte, wie in A) beschrieben.

Lack: Zu 500 g PHC 587 Lack werden 0,75 g Gasil HP 230 eingerührt. Anschließend wird über einen Filter mit der Porengröße 3-5µm filtriert.

Lackapplikation: Analog Beispiel 6.

Die Ergebnisse sind in der Tabelle 1 zusammenfassend dargestellt.

### Beispiel 9:

Beschichtung von flammgeschützten Makrolon LED 2245 Platten mit dem 1-Schichtlack PHC 587, der 1,5 Gew.-% des Mattierungsmittels Gasil HP 230 enthält

Substrat: LED 2245/C4 Platte, wie in A) beschrieben.

Lack: Zu 500 g PHC 587 Lack werden 1,5 g Gasil HP 230 eingerührt. Anschließend wird über einen Filter mit der Porengröße 3-5µm filtriert.

Lackapplikation: Analog Beispiel 6.

Die Ergebnisse sind in der folgenden Tabelle 1 zusammenfassend dargestellt.

**Tabelle 1:**

| | Substrat | PHC 587 | PHC 587 + 0,4% Gasil | PHC 587 + 0,75% Gasil | PHC 587 + 1,5% Gasil |
|---|---|---|---|---|---|
| Brandklasse analog UL 94 | LED 2245/C4 (Vergl.) | Bsp. 6 (Vergl.) | Bsp. 7 | Bsp. 8 | Bsp.9 |
| Anzahl Stäbe V-0 | 7 | 15 | 16 | 18 | 19 |
| Anzahl Stäbe V-1 | 0 | 1 | 0 | 1 | 1 |
| Anzahl Stäbe V-2 | 3 | 4 | 4 | 1 | 0 |
| Transmission / % | 90,0 | 91,3 | 91,1 | 91,3 | 90,8 |
| Haze / % | 1,4 | 1,0 | 1,8 | 2,5 | 4,6 |
| Stahlwoll Test | Zerkratzt | Keine Kratzer | Keine Kratzer | Keine Kratzer | Keine Kratzer |

Das Brandverhalten für die Beispiele 6 bis 9 wurden an 20 Prüfkörper nach UL 94 ermittelt, im Falle des Substrates an 10 Prüfkörpern.

Die Ergebnisse können folgendermaßen interpretiert werden:
- Kratzfestigkeit: Im Vergleich zum nicht beschichteten Substrat, das mit Stahlwolle stark zerkratzt wird, bestehen alle beschichteten Substrate den Stahlwolle Test problemlos.
- Haze: Mit steigender Menge an Gasil HP 230 werden erwartungsgemäß zunehmende Haze Werte (Trübungen) ermittelt.
- Flammschutz (FR) Werte (V-0, V-1, V-2): Überraschenderweise werden mit steigender Menge an Mattierungsmittel Gasil HP 230 deutlich verbesserte Flammschutz Ergebnisse (kein V-2 bei 1,5% Gasil HP 230) ermittelt.

### Beispiel 10: (Vergleich)

Beschichtung von flammgeschützten Makrolon^{®} LED 2245 Platten mit dem 1-Schichtlack PHC 587, der 2,0 Gew.-% des Mattierungsmittels Gasil HP 230 enthält

Substrat: Makrolon^{®} LED 2245/C4 Platte, wie in A) beschrieben.

Lack: Zu 500 g PHC 587 Lack werden 2,0 g Gasil HP 230 eingerührt. Anschließend wird über einen Filter mit der Porengröße 3-5µm filtriert.

Lackapplikation: Analog Beispiel 6.

Ergebnisse: Nach der Beschichtung wurde eine unregelmäßige Oberfläche mit einer stark erhöhten Rauhigkeit ermittelt. Wie mittels Lichtmikroskopie ermittelt wurde, sind Partikel Aggregationen für diese Defekte verantwortlich.

## Patentansprüche

1. Beschichteter Artikel, enthaltend a) ein Substrat (S) mit einer Transmission mindestens 88 %, (gemessen nach ASTM E 1348 bei 3 mm Schichtdicke und einer Wellenlänge von 550 nm) enthaltend ein flammgeschütztes thermoplastischen Polymer und b) auf dem Substrat eine Silika-Mikropartikel enthaltende Kratzfestbeschichtung (K), wobei 0,2 bis 1,8 Gew.-% Silika Mikropartikel bezogen auf den Feststoffanteil der Kratzfestbeschichtung (K) enthalten sind.

2. Beschichteter Artikel gemäß Anspruch 1, wobei das Substrat (S) eine Transmission > 89 % aufweist.

3. Beschichteter Artikel gemäß Anspruch 1, **dadurch gekennzeichnet, dass** es sich bei dem Substrat um ein flammgeschütztes Polycarbonat oder eine flammgeschützte Polycarbonatmischung mit einem MVR größer oder größer gleich 9 (bei 300 °C und 1,2 kg nach ISO 1133) handelt.

4. Beschichteter Artikel gemäß Anspruch 3, **dadurch gekennzeichnet, dass** es sich bei dem Substrat um ein flammgeschütztes Polycarbonat oder eine flammgeschützte Polycarbonatmischung mit einem MVR größer oder größer gleich 20 handelt.

5. Beschichteter Artikel gemäß Anspruch 1, wobei das Flammschutzmittel ausgewählt ist aus mindestens einem aus der Gruppe der Alkali- bzw. Erdalkalisälzen von aliphatischen bzw. aromatischen Sulfonsäure- Sulfonamid- und Sulfonimidderivaten und phosphorhaltigen Flammschutzmittel.

6. Beschichteter Artikel gemäß Anspruch 1, wobei das Flammschutzmittel ausgewählt ist aus mindestens einem aus der Gruppe bestehend aus Natrium- oder Kalium-nona-fluor-1-butansulfonat und Natrium- und Kalium-diphenylsulfonsulfonat.

7. Beschichteter Artikel gemäß Anspruch 1, **dadurch gekennzeichnet, dass** die Silika-Mikropartikel einen mittleren Teilchendurchmesser von 2 bis 15µm aufweisen.

8. Beschichteter Artikel gemäß Anspruch 1, **dadurch gekennzeichnet**, sich bei dem Substrat (S) um eine Platte, Scheibe oder Folie handelt.

9. Beschichteter Artikel gemäß Anspruch 1, wobei es sich bei der silika-haltigen Kratzfestbeschichtung um eine Beschichtung erhältlich aus einem thermisch härtbaren Hybridlack handelt.

10. Verwendung eines beschichteten Artikels gemäß Anspruch 1 zur Herstellung von Flachbildschirmen oder von Verscheibungen, insbesondere Automobil- oder Gebäudeverscheibungen.

11. Flachbildschirm und Verscheibungen enthaltend einen beschichteten Artikel gemäß Anspruch 1.

## Claims

1. Coated item comprising a) a substrate (S) with transmittance at least 88% (measured in accordance with ASTM E 1348 at 3 mm layer thickness and wavelength 550 nm) comprising a flame-retardant thermoplastic polymer and b) on the substrate, a scratch-resistant coating (K) comprising silica microparticles, where the amount of silica microparticles present, based on the solids content of the scratch-resistant coating (K), is from 0.2 to 1.8% by weight.

2. Coated item according to Claim 1, where the transmittance of the substrate (S) is > 89%.

3. Coated item according to Claim 1, **characterized in that** the substrate involves a flame-retardant polycarbonate or a flame-retardant polycarbonate mixture with MVR greater than or greater than or equal to 9 (for 300°C and 1.2 kg in accordance with ISO 1133).

4. Coated item according to Claim 3, **characterized in that** the substrate involves a flame-retardant polycarbonate or a flame-retardant polycarbonate mixture with MVR greater than or greater than or equal to 20.

5. Coated item according to Claim 1, where the flame retardant is one selected from at least one of the group of the alkali-metal or alkaline-earth-metal salts of aliphatic/aromatic sulfonic-acid, sulfonamide, and sulfonimide derivatives and phosphorus-containing flame retardants.

6. Coated item according to Claim 1, where the flame retardant is one selected from at least one of the group consisting of sodium nonafluoro-1-butane-sulfonate, potassium nonafluoro-1-butanesulfonate, sodium diphenyl sulfone sulfonate and potassium diphenyl sulfone sulfonate.

7. Coated item according to Claim 1, **characterized in that** the average particle diameter of the silica microparticles is from 2 to 15 µm.

8. Coated item according to Claim 1, **characterized in that** the substrate (S) involves a sheet, panel, or foil.

9. Coated item according to Claim 1, where the silica-containing scratch-resistant coating is a coating obtainable from a heat-curable hybrid coating material.

10. Use of a coated item according to Claim 1 for the production of flat screen elements or of glazing, in particular automotive glazing or architectural glazing.

11. Flat screen element and glazing comprising a coated item according to Claim 1.

## Revendications

1. Article revêtu, comportant a) un support (S) ayant une transmission d'au moins 88 %, (mesurée selon ASTM E 1348 à une épaisseur de couche de 3 mm et une longueur d'onde de 550 nm), contenant un polymère thermoplastique ignifugé et b) sur le support un revêtement anti-rayures (K) contenant des microparticules de silice, 0,2 à 1,8 % en poids de microparticules de silice étant contenues par rapport à la quantité de matière solide du revêtement anti-rayures (K).

2. Article revêtu selon la revendication 1, dans lequel le support (S) présente une transmission > 89 %.

3. Article revêtu selon la revendication 1, **caractérisé en ce que** pour ce qui est du support il s'agit d'un polycarbonate ignifugé ou d'un mélange de polycarbonates ignifugé ayant un indice de fluidité à chaud MVR supérieur ou supérieur ou égal à 9 (à 300 °C et sous 1,2 kg selon ISO 1133).

4. Article revêtu selon la revendication 3, **caractérisé en ce que** pour ce qui est du support il s'agit d'un polycarbonate ignifugé ou d'un mélange de polycarbonates ignifugé ayant un indice de fluidité à chaud MVR supérieur ou supérieur ou égal à 20.

5. Article revêtu selon la revendication 1, dans lequel l'agent ignifuge est choisi parmi au moins un du groupe des sels de métaux alcalins ou alcalino-terreux de dérivés aliphatiques ou aromatiques d'acide sulfurique, de sulfonamide ou de sulfonimide et des agents ignifuges phosphorés.

6. Article revêtu selon la revendication 1, dans lequel l'agent ignifuge est choisi parmi au moins un du groupe constitué par le nona-fluoro-1-butanesulfonate de sodium ou de potassium et le diphénylsulfonesulfonate de sodium et de potassium.

7. Article revêtu selon la revendication 1, **caractérisé en ce que** les microparticules de silice présentent un diamètre moyen de particule de 2 à 15 µm.

8. Article revêtu selon la revendication 1, **caractérisé en ce que** pour ce qui est du support (S) il s'agit d'une plaque, d'un disque ou d'un film.

9. Article revêtu selon la revendication 1, dans lequel pour ce qui est du revêtement anti-rayures contenant de la silice, il s'agit d'un revêtement pouvant être obtenu à partir d'une laque hybride durcissable thermiquement.

10. Utilisation d'un article revêtu selon la revendication 1, pour la fabrication d'écrans plats ou de vitrages, en particulier de vitrages d'automobiles ou de bâtiments.

11. Écran plat et vitrages contenant un article revêtu selon la revendication 1.
